# EUROPEAN PATENT SPECIFICATION

(11) **EP 4 044 012 B1**
(45) Date of publication and mention of the grant of the patent: **25.02.2026**
(21) Application number: 20874136.3
(22) Date of filing: 27.09.2020
(51) Int. Cl.: G06F 3/0481, G06F 3/04817, G06F 3/0482, G06F 3/0483, G06F 1/32, G06F 1/3234

(54) **METHOD AND APPARATUS FOR STARTING APPLICATION IN TERMINAL DEVICE, AND TERMINAL AND STORAGE MEDIUM**
VERFAHREN UND VORRICHTUNG ZUM STARTEN EINER ANWENDUNG IN EINEM ENDGERÄT SOWIE ENDGERÄT UND SPEICHERMEDIUM
PROCÉDÉ ET APPAREIL PERMETTANT DE DÉMARRER UNE APPLICATION DANS UN DISPOSITIF TERMINAL, AINSI QUE TERMINAL ET SUPPORT DE STOCKAGE

(30) Priority: 08.10.2019 CN 201910948019
(43) Date of publication of application: 17.08.2022
(73) Proprietor: GUANGDONG OPPO MOBILE TELECOMMUNICATIONS CORP., LTD., Dongguan, Guangdong 523860 (CN)
(72) Inventor: JIANG, Yi, Dongguan, Guangdong 523860 (CN); CHEN, Yan, Dongguan, Guangdong 523860 (CN)
(74) Representative: Penza, Giancarlo
(86) International application number: PCT/CN2020/118096
(87) International publication number: WO 2021/068775

(56) References cited:
- CN-A- 104 125 399
- CN-A- 104 850 433
- CN-A- 106 055 196
- CN-A- 109 085 962
- US-A1- 2014 189 597
- US-A1- 2015 033 361

## Description

### TECHNICAL FIELD

The disclosure relates to a technical field of computer technologies, and particularly to a method for launching an application on a terminal device, a terminal device, and a storage medium.

### BACKGROUND

As the mobile terminals are applied widespread in daily life, the mobile terminal provides a large visual range and a good display effect by using a large-size touch screen. However, a high power consumption of the large-size touch screen seriously challenges the battery life of the mobile terminal.

In the related art, in response to detecting the mobile terminal is locked, the mobile terminal enters a screen-off display mode to save the power consumption. When a target application requires to be launched on the mobile terminal, the mobile terminal device switches on the touch screen and performs an identity authentication operation. After the user is successfully authenticated by the mobile terminal, the terminal device is unlocked and displays the home screen, and then the user can click an application icon displayed on the home screen to launch an application corresponding to the clicked application icon.

CN106055196A discloses a method for starting application programs and a mobile terminal. The method is applied to the mobile terminal in a lock-screen state. By detecting operation of a user on a terminal touch screen, operation is determined whether to meet the pre-set condition. When the operation meets a pre-set condition, multiple application program icons are displayed in a pixel region of a lighting-up part of the touch screen. CN109085962 discloses a method for starting application programs on a mobile terminal. The user can trigger the terminal to display the interface of the target app by using a second input on the icon of the at least one app of N apps (ie, the icon of the target app), so that when the terminal is in the off state, the target app can be quickly launched.

### SUMMARY

Embodiments of the disclosure provide a method for launching an application on a terminal device, a terminal device, and a storage medium, by which the problem that complicated operations are required to launch an application on the terminal device in the screen-off display mode can be alleviated. The technical solutions are described as follows. The invention is defined by features of the independent claims. Preferred embodiments of the invention are defined by features of dependent claims.

### BRIEF DESCRIPTION OF THE DRAWINGS

In order to more clearly illustrate technical solutions in the embodiments of the disclosure, drawings used in the description of the embodiments will be briefly described below.
FIG. 1 illustrates a structural block diagram of a terminal device provided by some embodiments of the disclosure.
FIG. 2 is a flowchart illustrating a method for launching an application on a terminal device provided by some embodiments of the disclosure.
FIG. 3 is a schematic diagram illustrating unlocking of a terminal device based on the embodiment illustrated in FIG. 2.
FIG. 4 is a flowchart illustrating another method for launching an application on a terminal device provided by some exemplary embodiments of the disclosure.
FIG. 5 is a flowchart illustrating yet another method for launching an application on a terminal device provided by some embodiments of the disclosure.
FIG. 6 is a flowchart illustrating still another method for launching an application on a terminal device provided by some embodiments of the disclosure.
FIG. 7 is a schematic diagram illustrating an interface on which the terminal device displays n application icons provided by the embodiments illustrated in FIG. 6.
FIG. 8 is a schematic diagram illustrating another interface on which the terminal device displays n application icons provided by the embodiments illustrated in FIG. 6.
FIG. 9 is a schematic diagram illustrating an appearance of the terminal device provided by the embodiments illustrated in FIG. 6.
FIG. 10 is a schematic diagram illustrating displaying of the application icons on the terminal device based on the embodiments illustrated in FIG. 6.
FIG. 11 is another schematic diagram illustrating displaying of the application icons on the terminal device based on the embodiments illustrated in FIG. 6.
FIG. 12 illustrates a structural block diagram of an apparatus for launching an application on a terminal device provided by an example useful for understanding the invention but outside the scope of the invention as claimed.
FIG. 13 illustrates a structural block diagram of another apparatus for launching an application on a terminal device provided by an example useful for understanding the invention but outside the scope of the invention as claimed.

### DETAILED DESCRIPTION

In order to more clearly illustrate objects, technology solutions and advantages of the disclosure, the embodiments of the disclosure will be further described in detail below in conjunction with the drawings.

When the following description involves the drawings, unless otherwise indicated, the same numerals in different drawings represent the same or similar elements. The implementations described in the following exemplary embodiments do not represent all implementations that are consistent with the disclosure. On the contrary, the implementations are merely examples of apparatuses and methods that are described in detail in the appended claims and that are consistent with some aspects of the disclosure.

In the description of the disclosure, it should be noted that terms "first", "second" and the like, are only used for the purpose of description and cannot be understood as indicating or implying relative importance. In the description of the disclosure, it should be noted that, unless otherwise clearly specified and limited, the terms "interconnect" and "connect" should be understood broadly. For example, it may mean a fixed connection, a removable connection, or an all-in-one connection; a mechanical connection, or an electrical connection; a direct connection, or an indirect connection through an intermediate medium. For those skilled in the art, the specific meaning of the above-mentioned terms in the disclosure can be understood under specific circumstances. In addition, in the description of the disclosure, unless otherwise specified, "multiple" means two or more. "And/or" describes an association relationship of associated objects, and indicates that there can be three types of relationships, for example, A and/or B may represent three situations: A exists alone, A and B exist at the same time, and B exists alone. The character "/" generally represents that the associated objects before and after it are in an "or" relationship.

The embodiments of the disclosure provide the technology solutions as follows.

The method for launching an application on a terminal device includes operations as follows. At least one application icon is displayed on a screen-off display interface of the terminal device, where the screen-off display interface is a user interface displayed on the terminal device in a screen-off display mode. An application corresponding to one application icon of the at least one application icon is launched, in response to receiving a preset touch signal, where the preset touch signal is triggered by the terminal device upon receiving a preset touch operation performed on the one application icon.

In order to facilitate the understanding of the solutions shown in the embodiments of the disclosure, various terms appearing in the embodiments of the disclosure are introduced below.

The screen-off display mode (which is also known as always on display, AOD) mode refers to a display mode in which the terminal device displays information on the display screen when the display screen is off. In a possible implementation, in the screen-off display mode, the terminal device can display information through light emitted by pixels with self-luminescent capability. In such scenario, the terminal device has low power consumption and is enabled to display relevant information.

In a possible implementation provided by the disclosure, in the screen-off display mode, the terminal device may display a current system time, a calendar, a notification message, or a screen saver animation, and other contents.

In some implementations provided by the disclosure, in the screen-off display mode, the terminal device displays an application icon. The user interface displayed on the terminal device in the screen-off display mode is referred to as the screen-off display interface.

With regard to the screen-off display interface, in a possible implementation, the background of the screen-off display interface is black or some other dark color that is presented when the touch screen is not illuminated by a light source. In an application scenario, the screen-off display interface of the terminal device means that at least one icon composed of white lines or colorful lines is displayed on a black background.

The application icon refers to an icon displayed on the touch screen. Optionally, in response to detecting that the application icon is triggered, the terminal device displays a user interface corresponding to the application icon. In a possible implementation, the user interface displayed upon the triggering of the respective application icon may be a main interface of the application corresponding to the application icon, or a specified user interface of the application corresponding to the application icon. In another possible implementation, in response to detecting that the application icon is triggered, the terminal device may directly activate a function or service corresponding to the application icon. For example, when the application icon corresponds to a flashlight application, the terminal device directly launches the flashlight application once the application icon is triggered.

Optionally, the application icon may correspond to an application that is installed through an installation package, or may correspond to an application without being installed, such as an applet, a quick application, a mini application, or a light application, which is not limited in the disclosure.

The fast application refers to a system gadget or a system application provided by the terminal device, from one perspective. For example, the fast application may be a flashlight application, a mirror application, a calculator application, a compass application, a clock application, a timer application, a screen saver animation application, or a mini game application. From another perspective, the fast application may be a simplified application. For example, the fast application may also be at least one of a simplified camera application, a simplified memo application, or a simplified voice recorder application. For example, the simplified camera application only provides functions of shooting photos or videos, but does not provide a function of viewing albums. When the user needs to view the albums, the terminal device provides the function of viewing the albums after successfully authenticating the user's identity. For another example, the simplified memo application only provides a function of creating a new memo, but does not provide a function of viewing historical memos or editing existing memos. For yet another example, the simplified audio recorder application only provides a function of recording new audio, but does not provide a function of listening to existing recordings.

The embodiments of the disclosure provide a method for launching an application in a terminal device. The method is implemented by a terminal device capable of displaying information when the screen is off. The terminal device may include a mobile phone, a tablet computer, a smart watch, a digital camera, a MP4 playback terminal device, a MP5 playback terminal device, a learning machine, a point reading machine, an e-book or an electronic dictionary, etc.

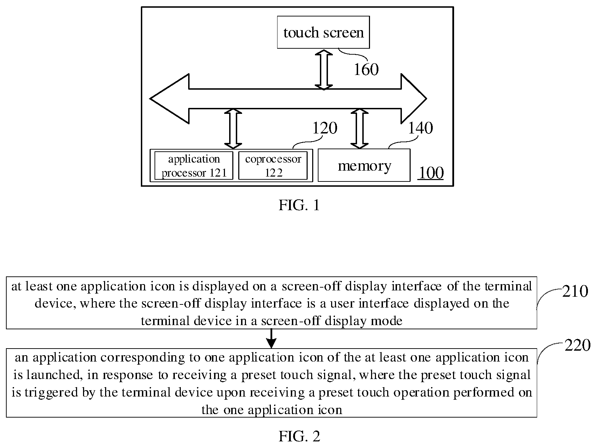

Referring to FIG. 1, a structural block diagram of a terminal device provided by some embodiments of the disclosure is illustrated. As illustrated in FIG. 1, the terminal device includes a processor 120, a memory 140, and a touch screen 160. The memory 140 stores thereon at least one instruction, and the at least one instruction is loaded and executed by the processor 120 to implement the method for launching an application on a terminal device provided by the various method embodiments of the disclosure.

In the disclosure, the terminal device 100 is capable of displaying information when the screen is off.

The processor 120 may include one or more processing core. The processor 120 uses various interfaces and lines to connect various parts of the entire terminal device 100. The processor 120 executes various functions of the terminal 100 and processes data by running or executing instructions, programs, code sets, or instruction sets stored in the memory 140 and calling data stored in the memory 140. Optionally, the processor 120 may be implemented as at least one hardware selected from digital signal processing (DSP), field-programmable gate array (FPGA), and programmable logic array (PLA). The processor 120 may be integrated with one of a central processing unit (CPU), a graphics processing unit (GPU), a modem, and the like, or a combination thereof. The CPU is mainly configured to process an operation system, a user interface, an application, etc. The GPU is configured to render and draw content required to be displayed on the touch screen. The modem is configured to process wireless communication. It can be understood that the modem may not be integrated into the processor 120, but may be implemented by a single chip.

In the embodiments of the disclosure, the processor 120 may include an application processor (AP) 121 and a coprocessor 122. The power consumption per unit time of the coprocessor 122 is less than the power consumption per unit time of the application processor 121. In the screen-off display mode, the coprocessor 122 may perform the control tasks, and the application processor 121 may enter a sleep state. Thus, it is possible to prevent the application processor 121 from being frequently waked up in the screen-off display mode, and reduce the power consumption of the terminal device in the screen-off display mode while ensuring the normal operation of the terminal device in this mode.

The memory 140 may include a random access memory (RAM), and may also include a read-only memory (ROM). Optionally, the memory 140 includes a non-transitory computer-readable storage medium. The memory 140 may be used to store instructions, programs, codes, code sets or instruction sets. The memory 140 may include a program storage area and a data storage area, and the program storage area may store instructions for implementing an operation system, instructions for at least one function (such as a touch control function, a sound playback function, an image playback function), instructions for implementing the various method embodiments as follows, and the like; and the data storage area may store data involved in the various method embodiments.

The touch screen 160 may include a glass cover, a touch sensor, and a display component. The touch sensor may be integrated under the glass cover, and the glass cover is configured to protect the touch sensor and the display component. Optionally, the display component may include display pixels. In a possible display mode, the display pixels may be self-luminescent, which is not limited in the embodiments of the disclosure. The terminal device may display information only through self-luminescence of the display pixels.

Referring to FIG. 2, a flowchart illustrating a method for launching an application on a terminal device provided by some embodiments of the disclosure is illustrated. The method for launching an application on a terminal device is implemented by the terminal device shown in FIG. 1. In FIG.2, the method for launching an application on a terminal device includes blocks 210 and 220.

At block 210, at least one application icon is displayed on a screen-off display interface of the terminal device, where the screen-off display interface is a user interface displayed on the terminal device in a screen-off display mode.

In the embodiments of the disclosure, the display mode of the terminal device includes a screen-off display mode and a screen-on display mode, i.e., a normal display mode. In a possible implementation, after the terminal device is powered on, the touch screen of the terminal device may be in a display mode and a non-display mode. When the terminal device is in the display mode, a user interface is displayed in the touch screen of the terminal device displays. The displayed user interface may be a screen-off display interface in the screen-off display mode, or may be a normal display interface in the screen-on display mode.

In the embodiments of the disclosure, when the terminal device is in the screen-off display mode, the terminal device displays the at least one application icon on the screen-off display interface. The screen-off display interface refers to the user interface displayed on the terminal device in the screen-off display mode.

For example, in a possible display mode, the terminal device will enter the screen-off display mode, in response to detecting that no operation is performed on the terminal device within a long period of time or detecting that a press operation is performed on the power button. Optionally, whether to enable the screen-off display function of the terminal device performs may be set on a setting interface of the terminal device.

At block 220, an application corresponding to one application icon of the at least one application icon is launched, in response to receiving a preset touch signal, where the preset touch signal is triggered by the terminal device upon receiving a preset touch operation performed on the one application icon.

In the embodiments of the disclosure, in response to receiving the preset touch signal, the terminal device may launch the application corresponding to the one triggered application icon. The preset touch signal is triggered by the terminal device when the terminal device receives the preset touch operation performed on the one application icon of the displayed application icons.

It should be noted that, with regard to the preset touch signal received by the terminal device, one function thereof is to make the terminal device know that the terminal device is required to launch the application corresponding to the one application icon.

Regarding the application icons, the at least one application icon includes an icon of a fast application, for example, a flashlight application, a calculator application, or a compass application. The at least one application icon may also include an unlock application icon. The terminal device may unlock the touch screen and display a home screen, in response to detecting the received preset touch signal is directed at the unlock application icon. In another possible implementation, an unlock interface is displayed in response to detecting the received preset touch signal is directed at the unlock application icon.

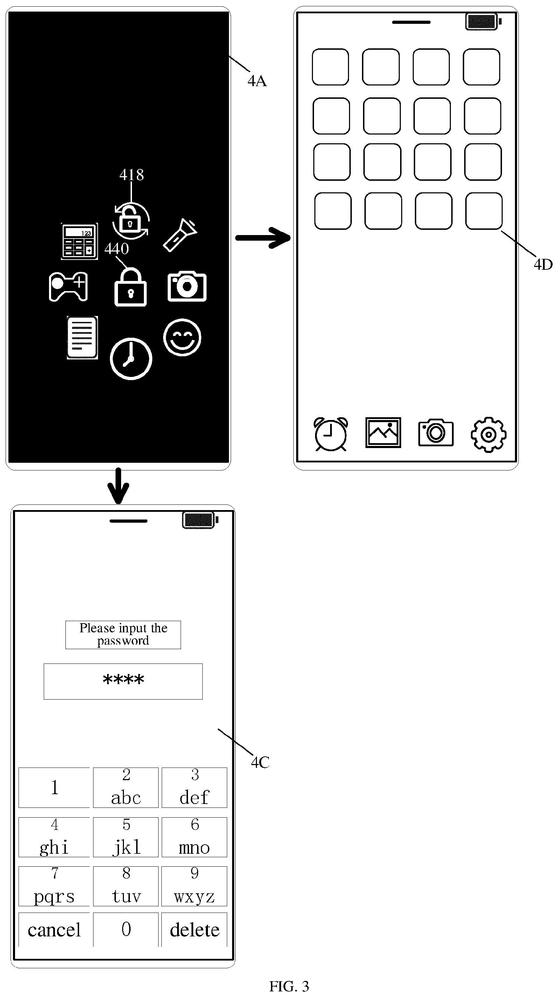

Referring to FIG. 3, FIG. 3 is a schematic diagram illustrating unlocking of the terminal device based on the embodiment illustrated in FIG. 2. In FIG. 3, the user interface will be switched from 4A to 4C to enable the user to enter a password for unlocking the terminal device, when one of the following conditions is met: a long-press operation performed by the user on the unlock application icon 418 is detected, or a pressing operation performed by the user simultaneously on both the icon 440 and the unlock application icon 418 is detected, or a dragging operation that the icon 440 is dragged by the user to partially overlap the unlock application icon 418 is detected. Alternatively, when one of the above conditions is met, the user interface is switched from 4A to 4D, that is, the user interface 4A is directly switched to the home screen 4D, which is not limited in the embodiments of the disclosure.

Based on the above, in the method for launching an application on a terminal device provided by the embodiments of the disclosure, the at least one application icon is displayed on the screen-off display interface of the terminal device, where the screen-off display interface is the user interface displayed on the terminal device in the screen-off display mode. In response to receiving the preset touch signal, the application corresponding to one application icon of the at least one application icon is launched, where the preset touch signal is triggered by the terminal device upon receiving the preset touch operation performed on the one application icon. In this way, when the screen of the terminal device is off, the terminal device is enabled to display at least one application icon on the screen-off display interface. When one of the at least one application icon is triggered by the preset touch signal, the terminal device can directly launch the application corresponding to the one triggered application icon without performing the unlock process. As such, the terminal device is enabled to directly launch the specified application on the screen-off interface without unlocking the terminal device.

Optionally, since the terminal device may launch the specified application without unlocking the terminal device, in the embodiments of the disclosure, the preset touch signal may be set as a signal not susceptible to an accident touch operation, so as to avoid the terminal device from mistakenly responding to the accident touch operation in the case where the unlocking is made unnecessary. In some implementations, the preset touch signal includes a sliding touch signal, and it may also include a long-press touch signal and a concurrent multi-touch signal which are examples useful for understanding the invention but outside the scope of the invention as claimed. The sliding touch signal is triggered by the terminal device upon receiving a preset sliding operation. The preset sliding operation is configured to indicate a touch operation sliding from a first position to a second position of the touch screen of the terminal device, where the first position is a preset position of the touch screen, and the second position is a position where the one application icon is located. The long-press touch signal is triggered by the terminal device upon receiving a target long-press operation, and the target long-press operation is performed on the one application icon. The concurrent multi-touch signal includes signals triggered by the terminal device upon simultaneously receiving at least two target touch operations. The target touch signal includes at least a first touch signal and a second touch signal, the first touch signal is triggered upon detecting a touch operation performed on a third position of the touch screen, and the second touch signal is triggered upon detecting a touch operation performed on a fourth position of the touch screen.

The above three optional operations in the embodiments of the disclosure, i.e., the sliding touch operation, the long-press touch operation, and the concurrent multi-point touch operation, reflect an obvious user intention. In the embodiments of the disclosure, the above three operations are used to trigger the preset touch signal, which can effectively prevent the application icons displayed on the screen-off display interface from being launched by mistake. That is, the embodiments of the disclosure can avoid the application corresponding to an application icon from being launched, when the user does not want to launch this application, or the embodiments of the disclosure can avoid a situation where the user wants to operate application icon A but the operation is made on application icon B.

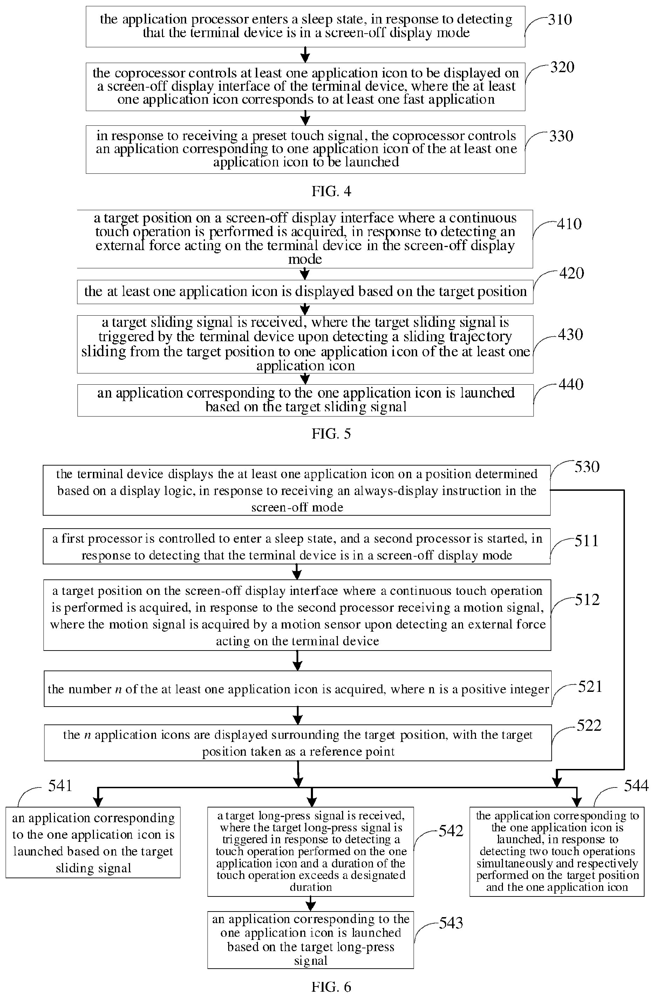

Referring to FIG. 4, a flowchart illustrating another method for launching an application on a terminal device provided by some exemplary embodiments of the disclosure is illustrated. The method for launching an application on a terminal device is implemented by the terminal device illustrated in FIG. 1. The terminal device includes the application processor and the coprocessor. In FIG.4, the method for launching an application on a terminal device includes blocks 310, 320 and 330.

At block 310, the application processor enters a sleep state, in response to detecting that the terminal device is in a screen-off display mode.

At block 320, the coprocessor controls at least one application icon to be displayed on a screen-off display interface of the terminal device, where the at least one application icon corresponds to at least one fast application.

In the embodiments of the disclosure, in response to detecting that the terminal device is in the screen-off display mode, the application processor is controlled to enter a sleep state, and the at least one application icon is displayed on the screen-off display interface under the control of the coprocessor. The power consumption per unit time of the coprocessor is less than the power consumption per unit time of the application processor.

Thus, in response to detecting that the terminal device is in the screen-off display mode, the application processor is controlled to enter the sleep state, and the coprocessor controls the at least one application icon to be displayed on the screen-off display interface, which can reduce the power consumption.

At block 330, in response to receiving a preset touch signal, the coprocessor controls an application corresponding to one application icon of the at least one application icon to be launched.

In the embodiments of the disclosure, in the screen-off display mode, the terminal device processes the related preset touch signal through the coprocessor. In response to receiving the preset touch signal, the application corresponding to the one application icon is launched by the coprocessor.

Based on the above, in the embodiments of the disclosure, in response to detecting that the terminal device is in the screen-off display mode, the application processor is controlled to enter the sleep state, and the coprocessor controls the at least one application icon to be displayed on the screen-off display interface of the terminal device. In response to receiving the preset touch signal, the application corresponding to the one application icon of the at least one application icon is launched under the control of the coprocessor. The preset touch signal is triggered by the terminal device upon receiving a preset touch operation performed on the one application icon. Since both the application processor and the coprocessor are provided in the terminal device, when the at least one application icon is displayed in the screen-off display mode, the application processor can be controlled to be asleep, and the coprocessor controls the displaying of the at least one application icon on the screen-off display interface, and the coprocessor launches the fast application corresponding to one application icon in response to receiving the preset touch signal. As such, not only the terminal device, being in a state that its screen is off, can be enabled to directly launch the fast application without unlocking the terminal device, but also the power consumption can be reduced.

Referring to FIG. 5, a flowchart illustrating a method for launching an application on a terminal device provided by some embodiments of the disclosure is illustrated. The method for launching an application on a terminal device is implemented by a terminal device. In response to detecting an external force acting on the terminal device in the screen-off display mode, the terminal device acquires a target position on the screen-off display interface where a continuous touch operation is performed. Based on the target position, the terminal device displays the at least one application icon, and receives a target sliding signal triggered by the terminal device in response to receiving an operation sliding from the target position to one application icon of the at least one application icon. The application corresponding to the one application icon is launched based on the target sliding signal. In FIG. 5, the method for launching an application on a terminal device includes blocks 410, 420, 430 and 440.

At block 410, a target position on a screen-off display interface where a continuous touch operation is performed is acquired, in response to detecting an external force acting on the terminal device in the screen-off display mode.

In the embodiments of the disclosure, the terminal device may enter the screen-off display mode in response to receiving a screen-off signal. In a possible implementation, the screen-off signal may be triggered by the terminal device in response to receiving a single click operation acting on the power button. In another possible implementation, the screen-off signal may be triggered in response to receiving a specified voice signal or receiving a specified gesture performed on the touch screen.

When the terminal device is in the screen-off display mode, the terminal device detects whether an external force acts on it. It should be noted that, the terminal device can determine, through a corresponding sensor, whether there is an external force acting on the terminal device.

Optionally, the terminal device may detect its motion state through a motion sensor. In response to determining that the motion parameters measured by the motion sensor match a preset force movement template, the terminal device determines that there is an external force acting on the terminal device.

Optionally, the terminal device may use a pressure sensor to monitor whether there is an external force acting on the terminal device. The pressure sensor may be provided at any of the front panel, the middle frame or the rear panel, which is not limited in the disclosure.

In another possible implementation, when no external force acting on the terminal device is detected, the terminal device can continuously detect whether there is an external force acting on the terminal device.

In the embodiments of the disclosure, in response to detecting the external force acting on the terminal device, the terminal device can activate a function of detecting the touch screen of the terminal device. In a possible implementation, the terminal device may control the touch screen to enter a sleep state, in the screen-off display mode. In such implementation, the terminal device no longer monitors whether the touch signal is received, which greatly reduces the power consumption of the terminal device and prevents the terminal device from mistakenly responding to an accident touch operation.

In another possible implementation, the terminal device may continuously monitor whether there is a target position on the touch screen where a continuous touch operation is performed. It should be noted that, in a possible implementation of the embodiments of the disclosure, a first processor, i.e., an application processor, and a second processor, i.e., a coprocessor, may be provided in the terminal device, and the power consumption per unit time of the first processor is larger than that of the second processor. The first processor is configured to process tasks of the terminal device in the screen-on state, i.e., the screen-on display mode, and the second processor is configured to determine, in the screen-off display mode of the terminal device, whether there is a target position of the terminal device where a continuous touch operation is performed. The provision of the second processor enables the terminal device to implement the improved method for launching an application on a terminal device and reduces the power consumption in the screen-off display mode. Optionally, in this implementation, in response to the second processor receiving a motion signal, the terminal device may use the second processor to detect whether there is a target position on the touch screen of the terminal device where the continuous touch operation is performed.

At block 420, the at least one application icon is displayed based on the target position.

In the embodiment of the disclosure, the terminal device displays the at least one application icon based on the target position.

In some implementations, the terminal device displays, with the target position as a center, multiple application icons surrounding the target position. The various application icons surrounding the target position are arranged in a shape of such as an arc or a circular ring.

In another possible implementation, the terminal device may take the target position as the origin of a coordinate system, and display the at least one application icon in one of the quadrants of the coordinate system, which is an example useful for understanding the invention but outside the scope of the invention as claimed. For example, the target position is taken as the origin of a coordinate system, when the target position is located at the upper left part of the touch screen, the terminal device displays the at least one application icon in the fourth quadrant; when the target position is located at the lower left part of the touch screen, the terminal device displays the at least one application icon in the first quadrant; when the target position is in the upper right part of the touch screen, the terminal device displays the at least one application icon in the third quadrant; when the target position is in the lower right part of the touch screen, the terminal device displays the at least one application icon in the second quadrant.

It should be noted that, when the user needs to display the at least one application icon on the terminal device, a long-press operation is required to be performed on the touch screen to trigger the displaying of the at least one application icon. In a possible implementation, a duration of the long-press operation may be set based on actual needs. For example, the duration may be a constant time such as 300 milliseconds, 500 milliseconds, or 1 second, which is not limited in the disclosure.

In a possible implementation, the terminal device may also display an indicator icon at the target position.

At block 430, a target sliding signal is received, where the target sliding signal is triggered by the terminal device upon detecting a sliding trajectory sliding from the target position to one application icon of the at least one application icon.

In the embodiments of the disclosure, the terminal device receives the target sliding signal. The target sliding signal is triggered by the terminal device upon detecting the sliding trajectory sliding from the target position to the one application icon.

At block 440, an application corresponding to the one application icon is launched based on the target sliding signal.

In the embodiments of the disclosure, the terminal device may constantly monitor the touch signal of the touch screen. In response to detecting the target sliding signal corresponding to an operation sliding from the target position to the one application icon, the terminal device launches the application corresponding to the one application icon based on the target sliding signal.

In a possible implementation, when the application corresponding to the one application icon is capable of being launched without undergoing the unlock process, the terminal device may directly launch the application corresponding to the one application icon. In a possible implementation, the terminal device may be maintained in the screen-off display mode and launch the application corresponding to the one application icon in the screen-off display mode.

Based on the above, in the method for launching an application on a terminal device provided in the embodiments, the terminal device can acquire the target position on the screen-off display interface where the continuous touch operation is performed, in response to detecting the external force acting on the terminal device in the screen-off display mode. The at least one application icon is displayed based on the target position. The target sliding signal is received, where the target sliding signal is triggered by the terminal device upon detecting a sliding operation sliding from the target position to one application icon of the at least one application icon. The application corresponding to the one application icon is launched based on the target sliding signal. Therefore, when the terminal device is in the screen-off display mode, the user may press any position of the touch screen, thereby enabling the terminal device to display the at least one application icon based on the target position where the touch operation is performed. Once the user performs a sliding operation from the target position to the one application icon of the at least one application icon, the terminal device directly launches the application corresponding to the one application icon without performing the unlocking process, which reduces the possibility that the terminal device mistakenly launches an application in response to an accidental touch operation, and enables the specific application to be launched quickly.

Based on the solution disclosed in the above embodiments, the terminal device may also display the at least one application icon based on the tilt of the touch screen of the terminal device, referring to the embodiments as follows.

Referring to FIG. 6, a flowchart illustrating another method for launching an application on a terminal device provided by some embodiments of the disclosure is illustrated. The method for launching an application on a terminal device may be implemented by the terminal device illustrated in FIG. 1. In FIG. 6, the method for launching an application on a terminal device includes blocks as follows.

At block 511, a first processor is controlled to enter a sleep state, and a second processor is started, in response to detecting that the terminal device is in a screen-off display mode.

In the embodiments of the disclosure, the power consumption of the terminal device may be further reduced by providing the second processor in the terminal device. It should be noted that the first processor is configured to perform tasks when the terminal device is in the screen-on state, that is, when the touch screen is on, the terminal device adopts the first processor to execute all tasks of the terminal device. In response to detecting the touch screen is locked, the first processor enters the sleep state, and the terminal device starts the second processor to execute various tasks that required to be performed by the terminal device. It should be noted that the second processor is configured to perform the tasks of the terminal device in the screen-off display mode.

The switching between the screen-off display mode and the screen-on state of the terminal device is instantaneously completed. If the terminal device is switched from the screen-off display mode to the screen-on state, and there is still an unfinished task for the second processor, the terminal device may control the second processor to enter the sleep state only after the second processor processes the unfinished task. In addition, the first processor may be awakened to work, in response to detecting the touch screen is on.

Correspondingly, when the terminal device switches from the screen-on state to the screen-off display mode, if there is still an unfinished task for the first processor, the terminal device may control the first processor to enter the sleep state only after the first processor processes the unfinished tasks. In addition, the second processor may be awakened to work, in response to detecting the touch screen is off.

In generally, the terminal device is provided with only one processor, and the processor of the terminal device is frequently awakened to execute tasks in the screen-off display mode. The tasks in the screen-off display mode require low software resources and hardware resources, which results in a high power consumption of the terminal device, and a low screen-off display efficiency of the terminal device. In the method for launching an application on a terminal device provided in the disclosure, the terminal device adopts the second processor to execute the tasks in the screen-off display mode, and the terminal device adopts the first processor to execute the tasks in the screen-on state. As such, the efficiency of the screen-off display of the terminal device is improved, and the power consumption of the terminal device for performing the same tasks is reduced.

At block 512, a target position on the screen-off display interface where a continuous touch operation is performed is acquired, in response to the second processor receiving a motion signal, where the motion signal is acquired by a motion sensor upon detecting an external force acting on the terminal device.

In the embodiments of the disclosure, the terminal device may receive the motion signal through the second processor, and the motion signal is acquired by the motion sensor upon detecting the external force acting on the terminal device. In response to the second processor receiving the motion signal, the terminal device determines that the external force is applied to it, and at this time, the terminal device acquires the target position on the screen-off display interface where the continuous touch operation is performed.

In a possible implementation, the motion signal may be a speed signal, an acceleration signal, or an impulse, and the like. The motion sensor may be a sensor device such as an acceleration sensor, a gravity sensor, a speed sensor, or a gyroscope.

In another possible implementation, the motion sensor may also be a pressure sensor, which can directly acquire the magnitude of the external force acting on the terminal device, when the external force acting on the terminal device is detected. Optionally, the pressure sensor may be provided in the touch screen of the terminal device. In response to receiving a hard press by the user's finger against the touch screen, the magnitude of the pressure is measured and sent to the second processor.

At block 521, the number n of the at least one application icon is acquired, where n is a positive integer.

In the embodiments of the disclosure, the terminal device acquires the number *n* of the at least one application icon, in response to determining the target position, where *n* is a positive integer. The terminal device may fix the at least one application icon to be displayed. In other words, such at least one application icon is fixed, and cannot be changed by the user. Alternatively, the terminal device may provide at least one candidate application icon for selection by the user, which is not limited in the embodiments of the disclosure.

Optionally, *n* may be a positive integer such as 1, 2, 3, 4, ..., 7, or 8. The terminal device may set *n* application icons for display by default, and may also ask the user to set the *n* application icons for display.

In a possible implementation, when *n* is set as 8, the 8 applications corresponding to the *n* application icons may include a calculator application, a mini game application, a memo application, a clock (including timer) application, a screen saver animation application, a camera application, a flashlight application and an unlock application. It should be noted that the screen of the terminal device is locked in the screen-off display mode. Thus, the n application icons may include a screen unlock application. When the screen unlock application is launched, the terminal device displays the unlock interface, in which the user may use at least one of a password, a graphic trajectory, a fingerprint or face recognition to unlock the screen.

At block 522, n application icons are displayed surrounding the target position, with the target position taken as a reference point.

In the embodiments of the disclosure, the terminal device displays the n application icons surrounding the target position with the target position taken as the reference point.

In a possible implementation, the terminal device may display the n application icons in zonal distribution surrounding the target position, with the target position taken as the center.

In another possible implementation, if there is no enough display space for displaying the *n* application icons surrounding the target position with the target position as the reference point, the terminal device determines the nearest center position as a new target position, and display the n application icons surrounding the nearest center position with the nearest center position as the reference point.

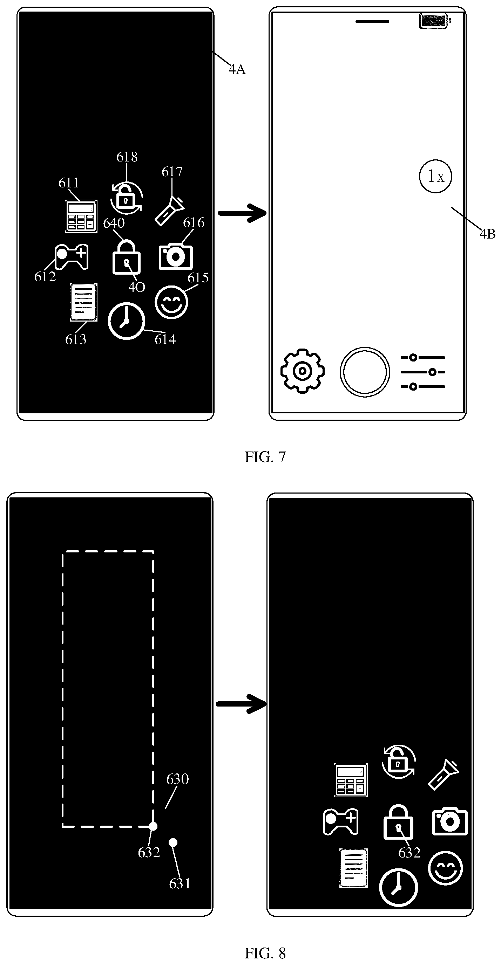

Referring to FIG. 7, FIG. 7 is a schematic diagram illustrating an interface on which the terminal device displays n application icons provided by the embodiments illustrated in FIG. 6. In FIG. 7, when the terminal device is in the screen-off display mode, nothing is originally displayed on the touch screen 4A of the terminal device. When the user performs a press operation on the touch screen 4A, the terminal device first determines that there is an external force acting on the terminal device, and then determines a target position 4O of the touch screen where a continuous touch operation is performed. Subsequently, the terminal device displays 8 application icons surrounding the target position 4O. In response to detecting a sliding signal that indicates a user's touch operation sliding from the target position 4O to the camera application icon 616, the terminal device launches the camera application and displays the shooting interface 4B. Optionally, the terminal device may display an indicator icon 640 at the target position. Optionally, the terminal device may also not display the indicator icon 640.

FIG. 7 illustrates 8 application icons, which include a calculator application icon 611, a mini game application icon 612, a memo application icon 613, a clock (including timer) application icon 614, a screen saver animation application icon 615, a camera application icon 616, a flashlight application icon 617 and an unlock application icon 618.

It should be noted that the terminal device displays the at least one application icon based on the target position where the user performs the touch operation, which facilitates the user to directly slide from the target position to one of the displayed application icons, thereby improving the efficiency of launching the application.

Referring to FIG. 8, FIG. 8 is a schematic diagram illustrating another interface on which the terminal device displays *n* application icons provided by the embodiments illustrated in FIG. 6. In FIG. 8, when the terminal device is in the screen-off display mode, if a press location 631 where the user's finger presses is located in a ring-shaped area 630 of the touch screen 4A, the terminal device determines a position 632 which is the nearest to the press location 631 as the nearest center position, and display the 8 application icons surrounding the nearest center position 632 with the nearest center position 632 taken as the target position.

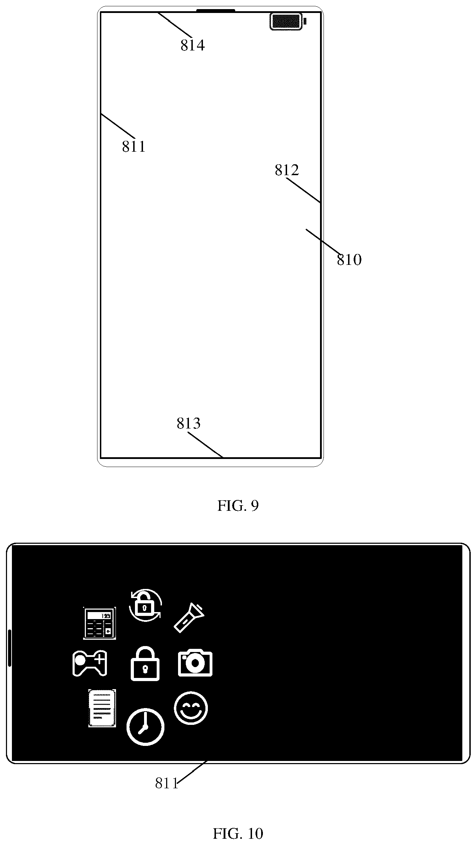

In some implementations, the terminal device performs operation (a1), operation (a2), and operation (a3), to enable the terminal device to display the n application icons surrounding the target position with the target position as the reference point. In the solution in which the terminal device performs operation (a1), operation (a2), and operation (a3), the terminal device includes a gravity sensor, the touch screen is in a shape of a rectangle or a rounded rectangle, and the touch screen includes a first edge and a second edge. The first edge refers to a long edge, and the second edge refers to a short edge. FIG. 9 is a schematic diagram illustrating an appearance of the terminal device provided by the embodiments illustrated in FIG. 6. In FIG. 9, the terminal device is provided with a touch screen 810 in the shape of the rounded rectangle. The touch screen 810 includes a first long edge 811, a second long edge 812, a first short edge 813 and a second short edge 814.

At operation (a1), a gravity force measured by the gravity sensor is acquired.

In the embodiments of the disclosure, the terminal device acquires the gravity force measured by the gravity sensor. The gravity sensor may work with different measurement principles, which is not limited in the embodiments of the disclosure. The sensor component capable of measuring the gravity force may be used as the gravity sensor of the disclosure.

At operation (a2), based on a component of the gravity force on the touch screen, an edge intersecting with the component is determined as a target bottom edge. The target bottom edge is a bottom edge of the touch screen in the front viewing angle.

In the embodiments of the disclosure, the second edge or the first edge is determined as the target bottom edge, in response to detecting that the component of the gravity force on the touch screen is a zero vector; or the edge intersecting with the component of the gravity force is determined as the target bottom edge, in response to detecting that the component of the gravity force on the touch screen is a non-zero vector.

It should be noted that, the user uses the terminal device with different poses, and thus the gravity force can be projected onto the plane where the touch screen is located, so as to obtain the component of the gravity force on the touch screen. The terminal device may determine the edge of the touch screen intersecting with the component of the gravity force as the target bottom edge. Alternatively, the terminal device may determine the edge of the touch screen intersecting with the extension line of the component of the gravity force as the target bottom edge, where the extension line extends along the direction of the component of the gravity force.

In a possible implementation, when the gravity force is in a direction perpendicular to the touch screen, a default bottom edge is determined as the target bottom edge. The default bottom edge is one designated edge of the touch screen.

If the touch screen of the terminal device is in the shape of the rectangle or the rounded rectangle, the default bottom edge is the first edge or the second edge, which is not limited in the embodiments.

At operation (a3), the target bottom edge is taken as the bottom edge of the screen-off display interface, and the n application icons are displayed surrounding the target position with the target position taken as the reference point.

Referring to FIG. 10, FIG. 10 is a schematic diagram illustrating displaying of the application icons on the terminal device provided by the embodiments illustrated in FIG. 6. In FIG.10, the component of the gravity force on the touch screen intersects with the first long edge 811. The terminal device takes the first long edge 811 as the target bottom edge to display the application icons, so that all the displayed application icons take the first long edge 811 as the target bottom edge.

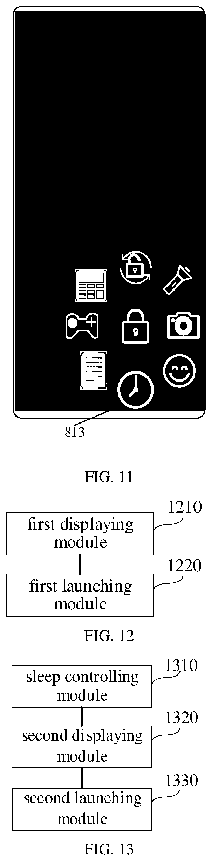

Referring to FIG. 11, FIG. 11 is another schematic diagram illustrating the displaying of the application icons on the terminal device provided by the embodiments illustrated in FIG. 6. In FIG. 10, the component of the gravity force on the touch screen intersects with the second short edge 813. The terminal device takes the second short edge 813 as the target bottom edge, to display the application icons, so that all the displayed application icons take the second short edge 813 as the target bottom edge.

It should be noted that, when the gravity force of the terminal device is in a direction perpendicular to the touch screen, the terminal device determines the default bottom edge as the target bottom edge. By taking the touch screen 810 as an example, the default bottom edge may be the second short edge 813.

In some implementations in which the *n* application icons are displayed surrounding the target position with the target position taken as the reference point, a relative position of an *i*-th application icon of the *n* application icons to the target position is constant, where *i* is a positive integer not greater than *n.*

It should be noted that there may be multiple implementations for making the relative position of the *i*-th application icon of the *n* application icons to the target position constant. In a possible implementation, a relative distance and a relative angle between the *i*-th application icon and the target position are both constant. In another possible implementation, the relative distance between the *i*-th application icon and the target position is constant. In still another possible implementation, the relative angle between the *i*-th application icon and the target position is constant.

It is illustrated in the following by taking a case where the relative distance and the relative angle between the *i*-th application icon and the target position are both constant as an example.

Referring to FIG. 7, both of the relative distance and the relative angle between the target position 4O and each of the 8 application icons are constant. In this scenario, no matter which edge of the terminal device is taken as the target bottom edge, the user may determine the position of an application icon corresponding to an application that requires to be launched, by taking the target position as the reference point. For example, if the user is aware of that the clock (including the timer) application icon 614 is directly below the target position 4O, the user may press the screen at a position and then slide down therefrom to launch the clock application regardless of the pose of the terminal device. As such, the efficiency of quickly launching the fast application by the user can be significantly improved.

In the embodiments of the disclosure, in addition to displaying the application icons on the terminal device by performing blocks 511 to 522, the terminal device may also continuously display the at least one application icon in the screen-off display mode. In this manner, the terminal device may perform block 530.

At block 530, the terminal device displays the at least one application icon on a position determined based on a display logic, in response to receiving an always-display instruction in the screen-off mode.

In the embodiments of the disclosure, the always-display instruction is configured to instruct the terminal device to continuously display the at least one application icon in the screen-off display mode.

It should be noted that, in addition to the solution of intelligently displaying the at least one application icon according to blocks 511 to 522 in the embodiments, the terminal device may also display the at least one application icon at a position corresponding to the display logic. The at least one application icon is always displayed when the terminal device is in the screen-off display mode. It should be noted that the display logic refers to a logic that continuously adjusting the display position of the at least one application icon over time. Based on such display logic, the pixels in the touch screen can work alternatively, which avoids a damage to the display screen caused by long time working.

For example, the display logic may set a period of one hour and make the period correspond to sixty different display positions. In this case, the display position of the application icon is changed to a next display position every minute. In the period of one hour, the terminal device sets each of the sixty positions as the display position of the one application icon.

At block 541, an application corresponding to the one application icon is launched.

In the embodiments of the disclosure, the execution process of block 541 is the same as the execution process of block 240, which will not be repeated here.

At block 542, a target long-press signal is received, where the target long-press signal is triggered in response to detecting a touch operation performed on the one application icon and a duration of the touch operation exceeds a designated duration.

At block 543, an application corresponding to the one application icon is launched based on the target long-press signal.

In the embodiments of the disclosure, the terminal device may launch the application corresponding to the one application icon, in response to detecting the target long-press signal. It should be noted that, with regard to the generation of the long-press signal, in a possible implementation, the designated duration may be a constant, such as 500 milliseconds, 1 second, or 2 seconds. Blocks 542 and 543 are an example useful for understanding the invention but outside the scope of the invention as claimed.

At block 544, the application corresponding to the one application icon is launched, in response to detecting two touch operations simultaneously and respectively performed on the target position and the one application icon. Block 544 is also an example useful for understanding the invention but outside the scope of the invention as claimed.

In the embodiments of the disclosure, the terminal device may launch the application corresponding to the one application icon, in response to detecting that the target position and the application icon are simultaneously touched.

In an implementation, when the difference between a time instant at which a touch operation starts to be performed on the target position and a time instant at which a touch operation starts to be performed on the application icon is less than a preset threshold, the terminal device determines that the two touch operations are simultaneously and respectively performed on the target position and the application icon respectively.

In another implementation, if an overlap time between a duration during which a touch operation is performed on the target position and a duration during which a touch operation is performed on the application icon is larger than a target duration, the terminal device determines that the two touch operations are simultaneously and respectively performed on the target position and the application icon respectively.

Based on the above, in the embodiments, the target bottom edge of the terminal device is determined based on the gravity force, for displaying the at least one application icon in the screen-off display mode. As such, the at least one application icon is displayed approximately based on a direction of the gravity force, and the relative distance between the displayed application icon and the target position is constant, which enables the user to quickly launch the corresponding application without viewing the touch screen, by pressing a position of the touch screen and then sliding therefrom to a designated position, thereby improving the efficiency of launching the application.

In the method for launching an application on a terminal device provided by the embodiments, the at least one application icon can also be continuously displayed at a respective position based on the display logic. Thus, in the disclosure, not only the at least one application icon can be continuously displayed, but also the display position can be changed over time based on the display logic, so as to prevent burn-in of the screen.

In the method for launching an application on a terminal device provided by the embodiments, the application corresponding to the one application icon is launched, in response to detecting a long-press operation performed on the one application icon, or detecting a concurrent multi-touch operation performed on both of the one application icon and the target position, which is an example useful for understanding the invention but outside the scope of the invention as claimed. As such, while improving the efficiency of launching an application, the terminal device is prevented from mistakenly launching an application through an accidental touch operation.

The apparatus embodiments will be described as follows, which may be configured to implement the method embodiments of the disclosure. Regarding details which are not described in the apparatus embodiments, reference may be made to the details of the method embodiments of the disclosure.

Referring to FIG. 12, a structural block diagram of an apparatus for launching an application on a terminal device provided by an example useful for understanding the invention but outside the scope of the invention as claimed is illustrated. The apparatus for launching an application on a terminal device may be implemented as an entire or a part of the terminal device by software, hardware, or a combination of thereof. The apparatus includes a first displaying module 1210 and a first launching module 1220.

The first displaying module 1210 is configured to display at least one application icon on a screen-off display interface of the terminal device, where the screen-off display interface is a user interface displayed on the terminal device in a screen-off display mode.

The first launching module 1220 is configured to launch an application corresponding to one application icon of the at least one application icon, in response to receiving a preset touch signal, where the preset touch signal is triggered by the terminal device upon receiving a preset touch operation performed on the one application icon.

In some possible embodiments, the preset touch signal related to the apparatus includes any one of the following touch signals: a sliding touch signal, a long-press touch signal, and a concurrent multi-touch signal. The sliding touch signal is triggered by the terminal device upon receiving a preset sliding operation, the preset sliding operation is configured to indicate a touch operation sliding from a first position to a second position of a touch screen of the terminal device, the first position is a preset position of the touch screen, and the second position is a position where the one application icon is located. The long-press touch signal is triggered by the terminal device upon receiving a target long-press operation performed on the one application icon. The concurrent multi-touch signal is triggered by the terminal device upon simultaneously receiving at least two target touch operations. Positions where the at least two target touch operations are performed includes at least a third position and a fourth position, the third position is the preset position of the touch screen, and the fourth position is the position where the one application icon is located.

Furthermore, the first launching module 1220 is configured to unlock the touch screen and display a home screen, in response to receiving a received preset touch signal directed at an unlock application icon; or display an unlock interface, in response to receiving a received preset touch signal directed at the unlock application icon.

Furthermore, when the at least one application icon is displayed on the screen-off display interface of the terminal device, the terminal device is in a screen-locked state and the at least one application icon corresponds to at least one fast application.

Furthermore, the first displaying module 1210 is configured to acquire a target position on the screen-off display interface where a continuous touch operation is performed, in response to detecting an external force acting on the terminal device in the screen-off display mode; and display, based on the target position, the at least one application icon on the screen-off display interface.

Furthermore, the first displaying module 1210 is configured to acquire the number n of the at least one application icon, where n is a positive integer; acquire a gravity force measured by the gravity sensor; determine, based on a component of the gravity force on the touch screen, an edge intersecting with the component, as a target bottom edge, where the target bottom edge is the bottom edge of the touch screen in a front viewing angle; and display the n application icons surrounding the target position based on the front viewing angle, with the target position taken as a reference point, where a relative position of an i-th application icon of the n application icons to the target position is constant, where *i* is a positive integer not greater than n. The terminal device includes a gravity sensor, the touch screen is in a shape of a rectangle or a rounded rectangle, and the touch screen includes a first edge and a second edge.

Furthermore, the first displaying module 1210 is configured to determine a default bottom edge as the target bottom edge, when the gravity force is in a direction perpendicular to the touch screen. The default bottom edge is one designated edge of the touch screen.

Referring to FIG. 13, a structural block diagram of another apparatus for launching an application on a terminal device provided by an example useful for understanding the invention but outside the scope of the invention as claimed of the disclosure is illustrated. The apparatus for launching an application on a terminal device may be implemented as an entire or a part of the terminal device by software, hardware, or a combination of thereof. The apparatus includes an application processor and a coprocessor, and a power consumption of the coprocessor is less than a power consumption of the application processor. The apparatus includes a sleep controlling module 1310, a second displaying module 1320 and a second launching module 1330. The sleep controlling module 1310 is configured to control the application processor to enter a sleep state, in response to detecting that the terminal device is in a screen-off display mode. The second displaying module 1320 is configured to display, under control of the coprocessor, at least one application icon on a screen-off display interface of the terminal device, where the at least one application icon corresponds to at least one fast application. The second launching module 1330 is configured to launch, under the control of the coprocessor, an application corresponding to one application icon of the at least one application icon, in response to receiving a preset touch signal. The preset touch signal is triggered by the terminal device upon receiving a preset touch operation performed on the one application icon.

In the disclosure, a terminal device is further provided. The terminal device includes an application processor and a coprocessor, and a power consumption of the coprocessor is less than a power consumption of the application processor. The application processor is configured to enter a sleep state, in response to detecting that the terminal device is in a screen-off display mode. The coprocessor is configured to display at least one application icon on a screen-off display interface of the terminal device, where the at least one application icon corresponds to at least one fast application. The coprocessor is configured to receive a preset touch signal, and in response to receiving the preset touch signal, launch an application corresponding to one application icon of the at least one application icon. The preset touch signal is triggered by the terminal device upon receiving a preset touch operation performed on the one application icon.

Optionally, the preset touch signal related to the apparatus includes any one of the following touch signals: a sliding touch signal, a long-press touch signal, or a concurrent multi-touch signal. The sliding touch signal is triggered by the terminal device upon receiving a preset sliding operation, the preset sliding operation is configured to indicate a touch operation sliding from a first position to a second position of a touch screen of the terminal device, the first position is a preset position of the touch screen, and the second position is a position where the one application icon is located. The long-press touch signal is triggered by the terminal device upon receiving a target long-press operation, and the target long-press operation is performed on the one application icon. The concurrent multi-touch signal is triggered by the terminal device upon simultaneously receiving at least two target touch operations. Positions where the at least two target touch operations are performed includes at least a third position and a fourth position, the third position is the preset position of the touch screen, and the fourth position is the position where the one application icon is located.

Optionally, the at least one application icon comprises an unlock application icon, and the coprocessor is configured to unlock the touch screen and display a home screen, in response to receiving a preset touch signal directed at an unlock application icon; or display an unlock interface, in response to receiving a preset touch signal directed at the unlock application icon. The at least one application icon includes the unlock application icon.

Optionally, the coprocessor is configured to acquire a target position on the screen-off display interface where a continuous touch operation is performed, in response to detecting an external force acting on the terminal device in the screen-off display mode; and display, based on the target position, the at least one application icon on the screen-off display interface.

The terminal device includes a gravity sensor, a shape of the touch screen is a rectangle or a rounded rectangle, the touch screen includes a first edge and a second edge. When displaying at least one application icon on the screen-off display interface of the terminal device, the coprocessor is configured to: acquire the number *n* of the at least one application icon, where n is a positive integer; acquire a gravity force measured by the gravity sensor; determine, based on a component of the gravity force on the touch screen, an edge intersecting with the component, as a target bottom edge; and display the *n* application icons surrounding the target position, with the target bottom edge taken as a bottom edge of the screen-off display interface, and with the target position taken as a reference point, where a relative position of an *i*-th application icon of the *n* application icons to the target position is constant, where *i* is a positive integer not greater than *n.*

Optionally, when determining, based on a component of the gravity force on the touch screen, an edge intersecting with the component as a target bottom edge, the coprocessor is configured to: determine the second edge or the first edge as the target bottom edge, in response to detecting the component of the gravity force on the touch screen is a zero vector; or determine, as the target bottom edge, the edge intersecting with the component of the gravity force, in response to detecting that the component of the gravity force on the touch screen is a non-zero vector.

Optionally, each pixel of the terminal device is capable of being independently activated to emit light. Each pixel can be controlled by a corresponding chip to independently emit light, which enables the information displaying when the screen is off.

The embodiments of the disclosure also provide a computer-readable medium, which stores thereon at least one program instruction. The at least one instruction is loaded and executed by the processor to implement the method for launching an application on a terminal device as described in various embodiments.

It should be noted that when the apparatus for launching an application on a terminal device provided in the embodiments implements the method for launching an application on a terminal device, the division of the function modules is merely used as an example for description. In practice, the functions may be allocated to different function modules for implementation according to a requirement. In other words, an internal structure of the terminal device is divided into different function modules, so as to complete all or some of the functions described above. In addition, the apparatus and method embodiments for launching an application on a terminal device provided by the embodiments pertain to a same conception. For a specific implementation process of the apparatus, reference is made to the method embodiments. Details are not described here again.

The serial numbers of the embodiments of the disclosure are merely for description, but do not indicate the preference of the embodiments.

Those skilled in the art can understand that all or some of the operations in the above embodiments may be implemented by hardware, or may be implemented by a program instructing relevant hardware. The program may be stored in a computer-readable storage medium. The storage medium may be a read-only memory, a magnetic disk, an optical disc, or the like.

## Claims

1. A method for launching an application on a terminal device (100), the method comprising:
displaying (210) at least one application icon on a screen-off display interface of the terminal device (100), wherein the screen-off display interface is a user interface displayed on the terminal device (100) in a screen-off display mode; and
launching (220) an application corresponding to one application icon of the at least one application icon, in response to receiving a preset touch signal, wherein the preset touch signal is triggered by the terminal device (100) upon receiving a preset touch operation performed on the one application icon;
wherein the displaying (210) at least one application icon on a screen-off display interface of the terminal device (100), comprises:
acquiring (410) a target position on the screen-off display interface where a continuous touch operation is performed, in response to detecting an external force acting on the terminal device (100) in the screen-off display mode; and
displaying (420), based on the target position, the at least one application icon on the screen-off display interface;
the launching (220) an application corresponding to one application icon of the at least one application icon, in response to receiving a preset touch signal, comprises:
launching the application corresponding to the one application icon, in response to receiving a target sliding signal triggered by the terminal device upon detecting a sliding trajectory sliding from the target position to the one application icon;
the terminal device (100) comprises a gravity sensor, a touch screen (810) of the terminal device (100) is in a shape of a rectangle or a rounded rectangle, the touch screen (810) comprises a first edge (811, 813) and a second edge (812, 814),
**characterized in that**, the displaying (420), based on the target position, the at least one application icon on the screen-off display interface, comprises:
acquiring the number *n* of the at least one application icon, where *n* is a positive integer;
acquiring a gravity force measured by the gravity sensor;
determining, based on a component of the gravity force on the touch screen (810), an edge of the touch screen (810), as a target bottom edge; and
displaying the *n* application icons surrounding the target position on the screen-off display interface, with the target bottom edge taken as a bottom edge of the screen-off display interface and with the target position taken as a reference point, wherein a relative position of an *i*-th application icon of the n application icons to the target position is constant, where *i* is a positive integer not greater than *n*.

2. The method as claimed in claim 1, wherein the preset sliding operation is configured to indicate a touch operation sliding from a first position to a second position of the touch screen (810) of the terminal device (100), the first position is the target position of the touch screen (810), and the second position is a position where the one application icon is located.

3. The method as claimed in claim 1 or 2, wherein the at least one application icon comprises an unlock application icon, and the launching (220) an application corresponding to one application icon of the at least one application icon, in response to receiving a preset touch signal, comprises:
unlocking the touch screen (810) and displaying a home screen, in response to receiving a preset touch signal directed at the unlock application icon; or
displaying an unlock interface, in response to receiving a preset touch signal directed at the unlock application icon.

4. The method as claimed in claim 1 or 2, wherein the at least one application icon comprises at least one of a fast application icon and an unlock application icon.

5. The method as claimed in claim 1, wherein the displaying (210) at least one application icon on a screen-off display interface of the terminal device (100), comprises:
displaying (530) the at least one application icon on a position determined based on a display logic, in response to receiving an always-display instruction in the lock-screen display mode, wherein the always-display instruction is configured to instruct the terminal device to continuously display the at least one application icon in the lock-screen display mode, the display logic refers to a logic that continuously adjusts a display position of the at least one application icon over time, and in different display positions, different pixels in the touch screen (810) of the terminal device (100) are configured to be lighted.

6. The method as claimed in claim 1, wherein the determining, based on a component of the gravity force on the touch screen (810), an edge of the touch screen (810) as a target bottom edge, comprises:
determining the second edge (812, 814) or the first edge (811, 813) as the target bottom edge, in response to detecting that the component of the gravity force on the touch screen (810) is a zero vector; or
determining, as the target bottom edge, the edge intersecting with the component of the gravity force, in response to detecting that the component of the gravity force on the touch screen (810) is a non-zero vector.

7. The method as claimed in claim 1, wherein the displaying the *n* application icons surrounding the target position, comprises:
displaying, with the target position taken as a center, the *n* application icons surrounding the target position, in response to determining that the target position is outside of a preset ring-shaped area (630) of the touch screen (810).

8. The method as claimed in claim 7, wherein the displaying the *n* application icons surrounding the target position, further comprises:
in response to determining that the target position is in the preset ring-shaped area (630) of the touch screen (810), determining a position which is nearest to the target position as the nearest center position (632); and
displaying the *n* application icons surrounding the nearest center position (632).

9. The method as claimed in claim 1 wherein the displaying (210) at least one application icon on a screen-off display interface of the terminal device (100), further comprises:
displaying the at least one application icon on the screen-off display interface continuously, in response to receiving an always-display instruction by the terminal device (100) in the screen-off mode.

10. The method as claimed in any one of claims 1-9, wherein the terminal device (100) comprises an application processor (121) and a coprocessor (122), a power consumption of the coprocessor (122) is less than a power consumption of the application processor (121), and the method comprises:
controlling (310) the application processor (121) to enter a sleep state, in response to detecting that the terminal device is in the screen-off display mode;
displaying (320), under control of the coprocessor (122), the at least one application icon on the screen-off display interface of the terminal device (100); and
in response to receiving the preset touch signal, launching (330), under the control of the coprocessor (122), an application corresponding to the one application icon.

11. The method as claimed in claim 1, wherein the launching the application corresponding to the one application icon comprises:
maintaining the terminal device (100) in the screen-off display mode and launching the application corresponding to the one application icon in the screen-off display mode.

12. A terminal device (100), wherein the terminal device (100) comprises an application processor (121) and a coprocessor (122), and a power consumption of the coprocessor (122) is less than a power consumption of the application processor (121);
wherein the application processor (121) is configured to enter a sleep state, in response to detecting that the terminal device (100) is in a screen-off display mode;
wherein the coprocessor (122) is configured to perform the operation of the method for launching an application on a terminal device (100) as claimed in any one of claims 1-11.

13. The terminal device (100) as claimed in claim 12, wherein each pixel of the terminal device (100) is capable of being independently activated to emit light.

14. A computer readable storage medium, storing thereon program instructions, wherein the program instructions, when being executed by a processor (120), cause the method for launching an application on a terminal device (100) as claimed in any one of claims 1-11 to be implemented.

## Patentansprüche

1. Verfahren zum Starten einer Anwendung auf einer Endgerätvorrichtung (100), wobei das Verfahren Folgendes umfasst:
Anzeigen (210) mindestens eines Anwendungssymbols auf einer Anzeigeoberfläche der Endgerätvorrichtung (100) bei ausgeschaltetem Bildschirm, wobei es sich bei der Anzeigeoberfläche bei ausgeschaltetem Bildschirm um eine Benutzeroberfläche handelt, die auf der Endgerätvorrichtung (100) in einem Bildschirm-Aus-Anzeigemodus angezeigt wird; und
Starten (220) einer Anwendung, die einem Anwendungssymbol des mindestens einen Anwendungssymbols entspricht, infolge eines Empfangens eines voreingestellten Berührungssignals, wobei das voreingestellte Berührungssignal von der Endgerätvorrichtung (100) beim Empfangen einer voreingestellten Berührungsoperation ausgelöst wird, die an dem Anwendungssymbol durchgeführt wird;
wobei das Anzeigen (210) mindestens eines Anwendungssymbols auf einer Anzeigeoberfläche bei ausgeschaltetem Bildschirm der Endgerätvorrichtung (100) Folgendes umfasst:
Erfassen (410) einer Zielposition auf der Anzeigeoberfläche bei ausgeschaltetem Bildschirm, auf der eine kontinuierliche Berührungsoperation durchgeführt wird, infolge eines Erkennens einer externen Kraft, die im Bildschirm-Aus-Anzeigemodus auf die Endgerätvorrichtung (100) wirkt; und
Anzeigen (420), basierend auf der Zielposition, des mindestens einen Anwendungssymbols auf der Anzeigeoberfläche bei ausgeschaltetem Bildschirm;
das Starten (220) einer Anwendung, die einem Anwendungssymbol des mindestens einen Anwendungssymbols entspricht, infolge eines Empfangens eines voreingestellten Berührungssignals, Folgendes umfasst:
Starten der Anwendung, die dem einen Anwendungssymbol entspricht, infolge eines Empfangens eines Zielverschiebungssignals, das von der Endgerätvorrichtung ausgelöst wird, sobald eine Wischbewegungsbahn von der Zielposition zu dem einen Anwendungssymbol erkannt wird;
die Endgerätvorrichtung (100) umfasst einen Schwerkraftsensor, ein Berührungsbildschirm (810) der Endgerätvorrichtung (100) ist in einer Form eines Rechtecks oder eines abgerundeten Rechtecks, der Berührungsbildschirm (810) umfasst eine erste Kante (811, 813) und eine zweite Kante (812, 814),
**dadurch gekennzeichnet, dass** das Anzeigen (420), basierend auf der Zielposition, des mindestens einen Anwendungssymbols auf der Anzeigeoberfläche bei ausgeschaltetem Bildschirm, Folgendes umfasst:
Erfassen der Anzahl n des mindestens einen Anwendungssymbols, wobei n eine positive ganze Zahl ist;
Erfassen einer Schwerkraft, die vom Schwerkraftsensor gemessen wird;
Bestimmen, basierend auf einer Komponente der Schwerkraft auf den Berührungsbildschirm (810), einer Kante des Berührungsbildschirms (810) als eine Zielunterkante; und
Anzeigen der n Anwendungssymbole um die Zielposition auf der Anzeigeoberfläche bei ausgeschaltetem Bildschirm, wobei die Zielunterkante als eine Unterkante der Anzeigeoberfläche bei ausgeschaltetem Bildschirm dient und die Zielposition als ein Referenzpunkt dient, wobei eine relative Position eines i. Anwendungssymbols der *n* Anwendungssymbole zur Zielposition konstant ist, wobei *i* eine positive ganze Zahl ist, die nicht größer als n ist.

2. Verfahren nach Anspruch 1, wobei die voreingestellte Wischbewegung so konfiguriert ist, dass sie eine Berührungsoperation anzeigt, bei der von einer ersten Position zu einer zweiten Position des Berührungsbildschirms (810) der Endgerätvorrichtung (100) gewischt wird, wobei die erste Position die Zielposition des Berührungsbildschirms (810) ist und die zweite Position eine Position ist, an der sich das eine Anwendungssymbol befindet.

3. Verfahren nach Anspruch 1 oder 2, wobei das mindestens eine Anwendungssymbol ein Entsperranwendungssymbol umfasst und das Starten (220) einer Anwendung, die einem Anwendungssymbol des mindestens einen Anwendungssymbols entspricht, infolge eines Empfangens eines voreingestellten Berührungssignals, Folgendes umfasst:
Entsperren des Berührungsbildschirms (810) und Anzeigen eines Startbildschirms infolge eines Empfangens eines voreingestellten Berührungssignals, das an das Entsperranwendungssymbol gerichtet ist; oder
Anzeigen einer Entsperroberfläche infolge eines Empfangens eines voreingestellten Berührungssignals, das an das Entsperranwendungssymbol gerichtet ist.

4. Verfahren nach Anspruch 1 oder 2, wobei das mindestens eine Anwendungssymbol mindestens eines von einem Schnellanwendungssymbol und einem Entsperranwendungssymbol umfasst.

5. Verfahren nach Anspruch 1, wobei das Anzeigen (210) mindestens eines Anwendungssymbols auf einer Anzeigeoberfläche bei ausgeschaltetem Bildschirm der Endgerätvorrichtung (100) Folgendes umfasst:
Anzeigen (530) des mindestens einen Anwendungssymbols an einer Position, die basierend auf einer Anzeigelogik bestimmt wird, infolge eines Empfangens einer Daueranzeigeanweisung im Sperrbildschirmanzeigemodus, wobei die Daueranzeigeanweisung so konfiguriert ist, dass sie die Endgerätvorrichtung anweist, das mindestens eine Anwendungssymbol im Sperrbildschirmanzeigemodus kontinuierlich anzuzeigen, die Anzeigelogik sich auf eine Logik bezieht, die eine Anzeigeposition des mindestens einen Anwendungssymbols im Laufe der Zeit fortlaufend anpasst, und in verschiedenen Anzeigepositionen unterschiedliche Pixel auf dem Berührungsbildschirm (810) der Endgerätvorrichtung (100) konfiguriert sind, beleuchtet zu werden.

6. Verfahren nach Anspruch 1, wobei das Bestimmen, basierend auf einer Komponente der Schwerkraft auf den Berührungsbildschirm (810), einer Kante des Berührungsbildschirms (810) als eine Zielunterkante, Folgendes umfasst:
Bestimmen der zweiten Kante (812, 814) oder der ersten Kante (811, 813) als Zielunterkante, infolge eines Erkennens, dass die Schwerkraftkomponente auf dem Berührungsbildschirm (810) ein Nullvektor ist; oder
Bestimmen, als die Zielunterkante, der Kante, die die Schwerkraftkomponente schneidet, infolge eines Erkennens, dass die Schwerkraftkomponente auf dem Berührungsbildschirm (810) ein Nicht-Nullvektor ist.

7. Verfahren nach Anspruch 1, wobei das Anzeigen der n Anwendungssymbole um die Zielposition herum Folgendes umfasst:
Anzeigen, wobei die Zielposition als ein Mittelpunkt dient, der n Anwendungssymbole, die die Zielposition umgeben, infolge eines Bestimmens, dass sich die Zielposition außerhalb eines voreingestellten ringförmigen Bereichs (630) des Berührungsbildschirms (810) befindet.

8. Verfahren nach Anspruch 7, wobei das Anzeigen der n Anwendungssymbole um die Zielposition herum weiter Folgendes umfasst:
infolge eines Bestimmens, dass sich die Zielposition im voreingestellten ringförmigen Bereich (630) des Berührungsbildschirms (810) befindet, Bestimmen einer Position, die der Zielposition am nächsten liegt, als die nächstgelegene Mittelpunktposition (632); und
Anzeigen der n Anwendungssymbole um die nächstgelegene Mittelpunktposition (632) herum.

9. Verfahren nach Anspruch 1, wobei das Anzeigen (210) mindestens eines Anwendungssymbols auf einer Anzeigeoberfläche bei ausgeschaltetem Bildschirm der Endgerätvorrichtung (100) weiter Folgendes umfasst:
Anzeigen des mindestens einen Anwendungssymbols fortlaufend auf der Anzeigeoberfläche bei ausgeschaltetem Bildschirm, infolge eines Empfangens einer Daueranzeigeanweisung von der Endgerätvorrichtung (100) im Bildschirm-Aus-Modus.

10. Verfahren nach einem der Ansprüche 1-9, wobei die Endgerätvorrichtung (100) einen Anwendungsprozessor (121) und einen Coprozessor (122) umfasst, ein Stromverbrauch des Coprozessors (122) geringer ist als ein Stromverbrauch des Anwendungsprozessors (121), und das Verfahren Folgendes umfasst:
Steuern (310) des Anwendungsprozessors (121), in einen Schlafzustand einzutreten, infolgedessen, dass erkannt wird, dass sich die Endgerätvorrichtung im Bildschirm-Aus-Anzeigemodus befindet;
Anzeigen (320), unter Steuerung des Coprozessors (122), des mindestens einen Anwendungssymbols auf der Anzeigeoberfläche bei ausgeschaltetem Bildschirm der Endgerätvorrichtung (100); und
infolge eines Empfangens des voreingestellten Berührungssignals, Starten (330), unter der Steuerung des Coprozessors (122), einer Anwendung, die dem einen Anwendungssymbol entspricht.

11. Verfahren nach Anspruch 1, wobei das Starten der Anwendung, die dem einen Anwendungssymbol entspricht, Folgendes umfasst:
Halten der Endgerätvorrichtung (100) im Bildschirm-Aus-Anzeigemodus und Starten der Anwendung, die dem Anwendungssymbol im Bildschirm-Aus-Anzeigemodus entspricht.

12. Endgerätvorrichtung (100), wobei die Endgerätvorrichtung (100) einen Anwendungsprozessor (121) und einen Coprozessor (122) umfasst und ein Stromverbrauch des Coprozessors (122) geringer ist als ein Stromverbrauch des Anwendungsprozessors (121);
wobei der Anwendungsprozessor (121) dazu konfiguriert ist, infolgedessen in einen Schlafzustand einzutreten, dass erkannt wird, dass sich die Endgerätvorrichtung (100) in einem Bildschirm-Aus-Anzeigemodus befindet;
wobei der Coprozessor (122) so konfiguriert ist, dass er die Operation des Verfahrens zum Starten einer Anwendung auf einer Endgerätvorrichtung (100) nach einem der Ansprüche 1-11 durchführt.

13. Endgerätvorrichtung (100) nach Anspruch 12, wobei jedes Pixel der Endgerätvorrichtung (100) unabhängig aktiviert werden kann, Licht auszustrahlen.

14. Computerlesbares Speichermedium, auf dem Programmanweisungen gespeichert sind, wobei die Programmanweisungen, wenn sie von einem Prozessor (120) ausgeführt werden, das Verfahren zum Starten einer Anwendung auf einer Endgerätvorrichtung (100) nach einem der Ansprüche 1-11 zu veranlassen.

## Revendications

1. Procédé de lancement d'une application sur un dispositif terminal (100), le procédé comprenant :
l'affichage (210) d'au moins une icône d'application sur une interface d'affichage d'écran éteint du dispositif terminal (100), dans lequel l'interface d'affichage d'écran éteint est une interface utilisateur affichée sur le dispositif terminal (100) en mode d'affichage d'écran éteint ; et
le lancement (220) d'une application correspondant à une icône d'application de la au moins une icône d'application, en réponse à la réception d'un signal tactile prédéfini, dans lequel le signal tactile prédéfini est déclenché par le dispositif terminal (100) lors de la réception d'une opération tactile prédéfinie effectuée sur l'icône d'application ;
dans lequel l'affichage (210) d'au moins une icône d'application sur une interface d'affichage d'écran éteint du dispositif terminal (100) comprend :
l'acquisition (410) d'une position cible sur l'interface d'affichage d'écran éteint où une opération tactile continue est effectuée, en réponse à la détection d'une force externe agissant sur le dispositif terminal (100) en mode d'affichage d'écran éteint ; et
l'affichage (420), sur la base de la position cible, de la au moins une icône d'application sur l'interface d'affichage d'écran éteint ;
le lancement (220) d'une application correspondant à une icône d'application de la au moins une icône d'application, en réponse à la réception d'un signal tactile prédéfini comprend :
le lancement de l'application correspondant à l'icône d'application, en réponse à la réception d'un signal de glissement cible déclenché par le dispositif terminal lors de la détection d'une trajectoire de glissement glissant depuis la position cible jusqu'à l'icône d'application ;
le dispositif terminal (100) comprend un capteur de gravité, un écran tactile (810) du dispositif terminal (100) est en forme de rectangle ou de rectangle arrondi, l'écran tactile (810) comprend un premier bord (811, 813) et un second bord (812, 814),
**caractérisé en ce que** l'affichage (420), sur la base de la position cible, de la au moins une icône d'application sur l'interface d'affichage d'écran éteint comprend :
l'acquisition du nombre *n* de la au moins une icône d'application, où *n* est un entier positif ;
l'acquisition d'une force de gravité mesurée par le capteur de gravité ;
la détermination, sur la base d'une composante de la force de gravité sur l'écran tactile (810), d'un bord de l'écran tactile (810) en tant que bord inférieur cible ; et
l'affichage des n icônes d'application entourant la position cible sur l'interface d'affichage d'écran éteint, avec le bord inférieur cible pris comme bord inférieur de l'interface d'affichage d'écran éteint et avec la position cible prise comme point de référence, dans lequel une position relative d'une i-ième icône d'application des *n* icônes d'application par rapport à la position cible est constante, où *i* est un entier positif inférieur ou égal à n.

2. Procédé selon la revendication 1, dans lequel l'opération de glissement prédéfinie est configurée pour indiquer une opération tactile glissant d'une première position à une seconde position de l'écran tactile (810) du dispositif terminal (100), la première position est la position cible de l'écran tactile (810), et la seconde position est une position où se trouve l'icône d'application.

3. Procédé selon la revendication 1 ou 2, dans lequel la au moins une icône d'application comprend une icône d'application de déverrouillage, et le lancement (220) d'une application correspondant à une icône d'application de la au moins une icône d'application, en réponse à la réception d'un signal tactile prédéfini, comprend :
le déverrouillage de l'écran tactile (810) et l'affichage d'un écran d'accueil, en réponse à la réception d'un signal tactile prédéfini dirigé vers l'icône d'application de déverrouillage ; ou
l'affichage d'une interface de déverrouillage, en réponse à la réception d'un signal tactile prédéfini dirigé vers l'icône d'application de déverrouillage.

4. Procédé selon la revendication 1 ou 2, dans lequel la au moins une icône d'application comprend au moins une d'une icône d'application rapide et d'une icône d'application de déverrouillage.

5. Procédé selon la revendication 1, dans lequel l'affichage (210) d'au moins une icône d'application sur une interface d'affichage d'écran éteint du dispositif terminal (100) comprend :
l'affichage (530) de la au moins une icône d'application sur une position déterminée sur la base d'une logique d'affichage, en réponse à la réception d'une instruction d'affichage permanent en mode d'affichage d'écran verrouillé, dans lequel l'instruction d'affichage permanent est configurée pour ordonner au dispositif terminal d'afficher en continu la au moins une icône d'application en mode d'affichage d'écran verrouillé, la logique d'affichage fait référence à une logique qui ajuste en continu une position d'affichage de la au moins une icône d'application au fil du temps, et dans différentes positions d'affichage, différents pixels dans l'écran tactile (810) du dispositif terminal (100) sont configurés pour être allumés.

6. Procédé selon la revendication 1, dans lequel la détermination, sur la base d'une composante de la force de gravité sur l'écran tactile (810), d'un bord de l'écran tactile (810) en tant que bord inférieur cible, comprend :
la détermination du second bord (812, 814) ou du premier bord (811, 813) en tant que bord inférieur cible, en réponse à la détection que la composante de la force de gravité sur l'écran tactile (810) est un vecteur nul ; ou
la détermination, en tant que bord inférieur cible, du bord croisant la composante de la force de gravité, en réponse à la détection que la composante de la force de gravité sur l'écran tactile (810) est un vecteur non nul.

7. Procédé selon la revendication 1, dans lequel l'affichage des n icônes d'application entourant la position cible comprend :
l'affichage, avec la position cible prise comme centre, des n icônes d'application entourant la position cible, en réponse à la détermination que la position cible est en dehors d'une zone annulaire prédéfinie (630) de l'écran tactile (810).

8. Procédé selon la revendication 7, dans lequel l'affichage des n icônes d'application entourant la position cible comprend en outre :
en réponse à la détermination que la position cible est dans la zone annulaire prédéfinie (630) de l'écran tactile (810), la détermination d'une position qui est la plus proche de la position cible en tant que position centrale la plus proche (632) ; et
l'affichage des n icônes d'application entourant la position centrale la plus proche (632).

9. Procédé selon la revendication 1 dans lequel l'affichage (210) d'au moins une icône d'application sur une interface d'affichage d'écran éteint du dispositif terminal (100) comprend en outre :
l'affichage en continu de la au moins une icône d'application sur l'interface d'affichage d'écran éteint, en réponse à la réception d'une instruction d'affichage permanent par le dispositif terminal (100) en mode d'écran éteint.

10. Procédé selon l'une quelconque des revendications 1-9, dans lequel le dispositif terminal (100) comprend un processeur d'application (121) et un coprocesseur (122), une consommation d'énergie du coprocesseur (122) est inférieure à une consommation d'énergie du processeur d'application (121), et le procédé comprend :
la commande (310) du processeur d'application (121) pour entrer dans un état de veille, en réponse à la détection que le dispositif terminal est en mode d'affichage d'écran éteint ;
l'affichage (320), sous la commande du coprocesseur (122), de la au moins une icône d'application sur l'interface d'affichage d'écran éteint du dispositif terminal (100) ; et
en réponse à la réception du signal tactile prédéfini, le lancement (330), sous la commande du coprocesseur (122), d'une application correspondant à l'icône d'application.

11. Procédé selon la revendication 1, dans lequel le lancement de l'application correspondant à l'icône d'application comprend :
le maintien du dispositif terminal (100) en mode d'affichage d'écran éteint et le lancement de l'application correspondant à l'icône d'application en mode d'affichage d'écran éteint.

12. Dispositif terminal (100), dans lequel le dispositif terminal (100) comprend un processeur d'application (121) et un coprocesseur (122), et une consommation d'énergie du coprocesseur (122) est inférieure à une consommation d'énergie du processeur d'application (121) ;
dans lequel le processeur d'application (121) est configuré pour entrer dans un état de veille, en réponse à la détection que le dispositif terminal (100) est en mode d'affichage d'écran éteint ;
dans lequel le coprocesseur (122) est configuré pour effectuer l'opération du procédé de lancement d'une application sur un dispositif terminal (100) selon l'une quelconque des revendications 1-11.

13. Dispositif terminal (100) selon la revendication 12, dans lequel chaque pixel du dispositif terminal (100) est capable d'être activé indépendamment pour émettre de la lumière.

14. Support de stockage lisible par ordinateur, stockant sur celui-ci des instructions de programme, dans lequel les instructions de programme, lorsqu'elles sont exécutées par un processeur (120), permettent de mettre en œuvre le procédé de lancement d'une application sur un dispositif terminal (100) selon l'une quelconque des revendications 1-11.
